# EUROPEAN PATENT APPLICATION

(11) **EP 4 760 854 A1**
(43) Date of publication of application: **17.06.2026**
(21) Application number: 24868187.6
(22) Date of filing: 11.09.2024
(51) Int. Cl.: H01M 10/0587, H01G 11/26, H01G 11/52, H01G 11/78, H01M 10/04, H01M 50/103, H01M 50/119, H01M 50/443, H01M 50/474, H01M 50/586, H01M 50/593

(54) **POWER STORAGE ELEMENT AND METHOD FOR PRODUCING POWER STORAGE ELEMENT**

(30) Priority: 22.09.2023 JP 2023158460
(71) Applicant: GS Yuasa International Ltd., Kisshoin, Minami-ku, Kyoto-shi, Kyoto 601-8520 (JP)
(72) Inventor: ITO Shota, Kyoto-shi, Kyoto 601-8520 (JP)
(74) Representative: Isarpatent
(86) International application number: PCT/JP2024/032576
(87) International publication number: WO 2025/063110

(57) **Abstract**

An energy storage device according to one aspect of the present invention includes: an electrode body having a flat surface; and a stainless steel container accommodating the electrode body, wherein the container has a protrusion on an inner surface thereof, the protrusion being provided at a location facing the flat surface of the electrode body, and the electrode body has an outermost layer containing inorganic particles as a main component.

## Description

### TECHNICAL FIELD

The present invention relates to an energy storage device and a method for manufacturing an energy storage device.

### BACKGROUND ART

Chargeable and dischargeable energy storage devices (secondary batteries, capacitors, etc.) are used in various devices such as vehicles including electric vehicles, and household appliances. As an energy storage device, there is known one including an electrode body such as a wound type or a stacked type having a positive electrode and a negative electrode. Such an electrode body is housed in a container together with, for example, an electrolyte or the like to constitute an energy storage device.

Patent Literature 1 describes an energy storage device including a wound electrode body and a container for accommodating the electrode body, wherein the container has a protrusion on an inner surface thereof that directly or indirectly contacts the electrode body.

### CITATION LIST

### Patent Literature

Patent Literature 1: Japanese Unexamined Patent Application Publication No. 2013-239376

### DISCLOSURE OF INVENTION

### PROBLEMS TO BE SOLVED BY THE INVENTION

In the energy storage device described in Patent Literature 1 including the container having the protrusion on the inner surface, it is stated that there is an effect that movement of the electrode body due to the influence of vibration is suppressed by this protrusion. However, when the protrusion is provided on the inner surface of the container, when inserting the electrode body into the container in a manufacturing process of the energy storage device, the electrode body may get caught on the protrusion on the inner surface of the container, making it difficult to insert, and further, defects in the electrode body (for example, falling off of active material, occurrence of wrinkling, etc.) may occur due to the electrode body getting caught on the protrusion. In particular, when the container is made of stainless steel, since the container is hard and difficult to deform, the above-mentioned inconvenience caused by the electrode body getting caught on the protrusion occurs remarkably.

The present invention has been made based on the circumstances as described above, and an object thereof is to provide an energy storage device including a stainless steel container having a protrusion on an inner surface, the energy storage device being excellent in insertability of an electrode body in a manufacturing process, and a method for manufacturing such an energy storage device.

### MEANS FOR SOLVING THE PROBLEMS

An energy storage device according to one aspect of the present invention includes: an electrode body having a flat surface; and a stainless steel container accommodating the electrode body, wherein the container has a protrusion on an inner surface thereof, the protrusion being provided at a location facing the flat surface of the electrode body, and the electrode body has an outermost layer containing inorganic particles as a main component.

A method for manufacturing an energy storage device according to another aspect of the present invention includes: preparing an electrode body having a flat surface; preparing a stainless steel container having a protrusion on an inner surface; and inserting the electrode body into the container such that the flat surface of the electrode body and the protrusion on the inner surface of the container face each other, wherein the electrode body has an outermost layer containing inorganic particles as a main component.

### EFFECT OF THE INVENTION

According to any one aspect of the present invention, it is possible to provide an energy storage device including a stainless steel container having a protrusion on an inner surface thereof, the energy storage device being excellent in insertability of an electrode body in a manufacturing process, and a method for manufacturing such an energy storage device.

### BRIEF DESCRIPTION OF DRAWINGS

[FIG. 1] FIG. 1 is a schematic perspective view illustrating an energy storage device according to an embodiment of the present invention.
[FIG. 2] FIG. 2 is a schematic cross-sectional view taken along line I-I of the energy storage device of FIG. 1.
[FIG. 3] FIG. 3 is a schematic partial cross-sectional view taken along line I-I of the container of FIG. 1.
[FIG. 4] FIG. 4 is a schematic perspective view illustrating an outline of the configuration of the electrode body of the energy storage device of FIG. 1.
[FIG. 5] FIG. 5 is a schematic partial cross-sectional view illustrating an outline of the configuration of the electrode body of the energy storage device of FIG. 1.
[FIG. 6] FIG. 6 is a schematic cross-sectional view illustrating an energy storage device according to another embodiment, different from the energy storage device of FIG. 1.
[FIG. 7] FIG. 7 is a schematic cross-sectional view illustrating an energy storage device according to yet another embodiment.
[FIG. 8] FIG. 8 is a schematic plan view illustrating an energy storage apparatus configured by assembling a plurality of the energy storage devices of FIG. 1.

### DESCRIPTION OF EMBODIMENTS

First, an outline of an energy storage device and a method for manufacturing an energy storage device disclosed by the present specification will be described.
(1) An energy storage device according to one aspect of the present invention includes:
   an electrode body having a flat surface; and a stainless steel container accommodating the electrode body, wherein the container has a protrusion on an inner surface thereof,
   the protrusion being provided at a location facing the flat surface of the electrode body, and the electrode body has an outermost layer containing inorganic particles as a main component.

The energy storage device described in the above (1) is an energy storage device including a stainless steel container having a protrusion on an inner surface, and is excellent in insertability of the electrode body in a manufacturing process. The reason why such an effect occurs is not certain, but the following reason is presumed. When the outermost layer of the electrode body is formed of a material having a large frictional force against the inner surface of the container, such as a resin layer, the electrode body is likely to get caught on the protrusion on the inner surface of the container when inserting the electrode body into the container. In contrast, when the outermost layer of the electrode body is a layer containing inorganic particles as a main component, the frictional force between the surface of the electrode body and the inner surface of the container is small. In such a case, when inserting the electrode body into the container, the electrode body easily slides against the inner surface of the container, so that the electrode body is less likely to get caught on the protrusion on the inner surface of the container. Even when another member is interposed between the electrode body and the container, the electrode body is similarly less likely to get caught on the protrusion on the inner surface of the container, since an interface between the electrode body and the other member becomes slippery. From the above, in the energy storage device described in the above (1), it is presumed that the insertability of the electrode body in the manufacturing process is excellent. Further, in the energy storage device described in the above (1), since the insertability of the electrode body in the manufacturing process is excellent, defects of the electrode body at the time of insertion are less likely to occur, and the occurrence of defectives in the manufacturing process is suppressed.

Note that the "main component" refers to a component having the largest content on a mass basis.

Further, the "flat surface" may be a substantially flat surface, and for example, wrinkling, depression, a step, or the like may partially occur. The "flat surface" is typically an outer surface in a portion where a positive electrode and a negative electrode are substantially parallelly stacked with a separator interposed therebetween in the electrode body.

Regarding the "stainless steel container", for example, when the container is composed of a container body and a lid body, it is sufficient that the container body is made of stainless steel. In this case, it is preferable that the entire container (both the container body and the lid body) is made of stainless steel.

(2) In the energy storage device described in the above (1), the container may have, on an outer surface, a recess along a shape of the protrusion on the inner surface.

A container having, on an outer surface, a recess along the shape of a protrusion on an inner surface is relatively easy to manufacture; for example, it can be produced by processing a stainless steel plate material having a substantially uniform thickness. Therefore, the energy storage device described in the above (2) has further advantages such as high productivity.

(3) In the energy storage device described in the above (1) or (2), in a state where no external force is applied to the container, at least a part of the flat surface of the electrode body may be in contact with the protrusion on the inner surface of the container directly or via another member.

Generally, in the case of an energy storage device configured such that at least a part of the flat surface of the electrode body is in contact with the protrusion on the inner surface of the container directly or via another member in a state where no external force is applied to the container, the protrusion on the inner surface of the container is likely to contact the electrode body or the other member when inserting the electrode body, and the electrode body is likely to get caught. Therefore, in the case of the energy storage device described in the above (3), the technical significance of enhancing insertability by providing, on the electrode body, the outermost layer containing inorganic particles as a main component is significant.

Note that in the "state where no external force is applied to the container", atmospheric pressure may be applied to the container as the "external force". The energy storage device in the "state where no external force is applied to the container" may be the energy storage device under 1 atmosphere.

Further, the "other member" corresponds to a solid member such as an insulating member described below, and does not include a liquid member such as an electrolyte solution.

(4) The energy storage device described in any one of the above (1) to (3) may further include an insulating member interposed between the electrode body and the container.

The energy storage device described in the above (4) has high electrical insulation between the electrode body and the container. Further, even in the energy storage device described in the above (4) provided with such an insulating member, an effect of excellent insertability of the electrode body in the manufacturing process can be obtained, since the interface between the outermost layer of the electrode body and the insulating member is slippery.

(5) In the energy storage device described in any one of the above (1) to (4), the electrode body may be a wound electrode body formed by winding a positive electrode and a negative electrode in a state where the positive electrode and the negative electrode are stacked with a separator interposed therebetween, and the outermost layer of the electrode body may be a part of the separator.

In the case of the energy storage device described in the above (5), by winding the positive electrode and the negative electrode in a state where they are stacked with the separator interposed therebetween, the electrode body having the layer containing inorganic particles as a main component included in the separator as the outermost layer can be easily produced, and productivity is high.

(6) In the energy storage device described in any one of the above (1) to (5), the electrode body may be a wound electrode body formed by winding a positive electrode and a negative electrode in a state where the positive electrode and the negative electrode are stacked with a separator interposed therebetween, the container may have a container body having an opening and a lid body closing the opening, and a winding axis of the electrode body may be parallel to the lid body.

In the case of the energy storage device described in the above (6), when inserting the wound electrode body into the container, it is inserted from a curved surface of the electrode body. Therefore, the energy storage device described in the above (6) is particularly excellent in insertability, and defects of the electrode body at the time of insertion are further suppressed.

(7) In the energy storage device described in any one of the above (1) to (5), the electrode body may be a wound electrode body formed by winding a positive electrode and a negative electrode in a state where the positive electrode and the negative electrode are stacked with a separator interposed therebetween, the container may have a container body having an opening and a lid body closing the opening, and a winding axis of the electrode body may be perpendicular to the lid body.

In the case of the energy storage device described in the above (7), when inserting the wound electrode body into the container, it is inserted from an end surface of the electrode body (a surface where end surfaces of the positive electrode and the negative electrode are exposed). Usually, in such a case, when inserting the electrode body, the electrode body is likely to get caught, and further, if it gets caught, defects are likely to occur in the electrode body. Therefore, in the case of the energy storage device described in the above (7), the technical significance of enhancing insertability by providing, on the electrode body, the outermost layer containing inorganic particles as a main component is significant.

(8) A method for manufacturing an energy storage device according to another aspect of the present invention includes: preparing an electrode body having a flat surface; preparing a stainless steel container having a protrusion on an inner surface; and inserting the electrode body into the container such that the flat surface of the electrode body and the protrusion on the inner surface of the container face each other, wherein the electrode body has an outermost layer containing inorganic particles as a main component.

According to the method for manufacturing an energy storage device described in the above (8), insertability of the electrode body in a manufacturing process of an energy storage device including a stainless steel container having a protrusion on an inner surface is excellent. Therefore, according to the method for manufacturing an energy storage device described in the above (8), defects of the electrode body at the time of insertion are less likely to occur, and the occurrence of defectives is suppressed.

Hereinafter, an energy storage device according to one embodiment of the present invention, a method for manufacturing the energy storage device, an energy storage apparatus, and other embodiments will be described in detail. Note that the names of respective constituent members (respective constituent elements) used in the respective embodiments may be different from the names of respective constituent members (respective constituent elements) used in the background art.

### <Energy Storage Device 100>

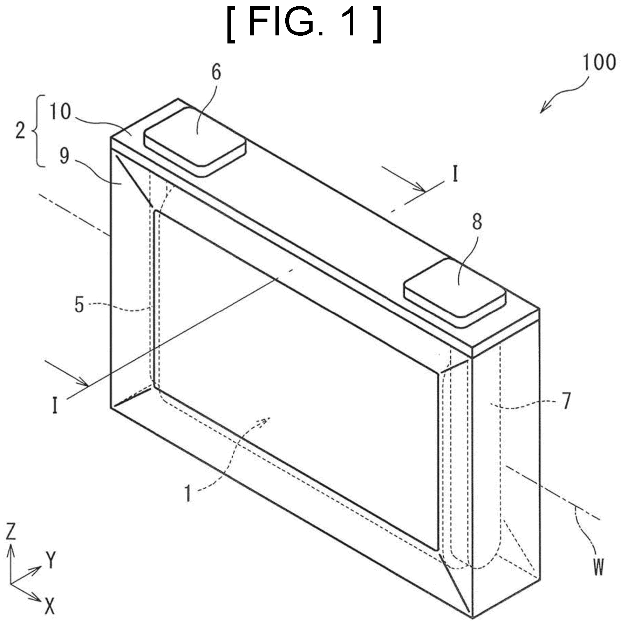

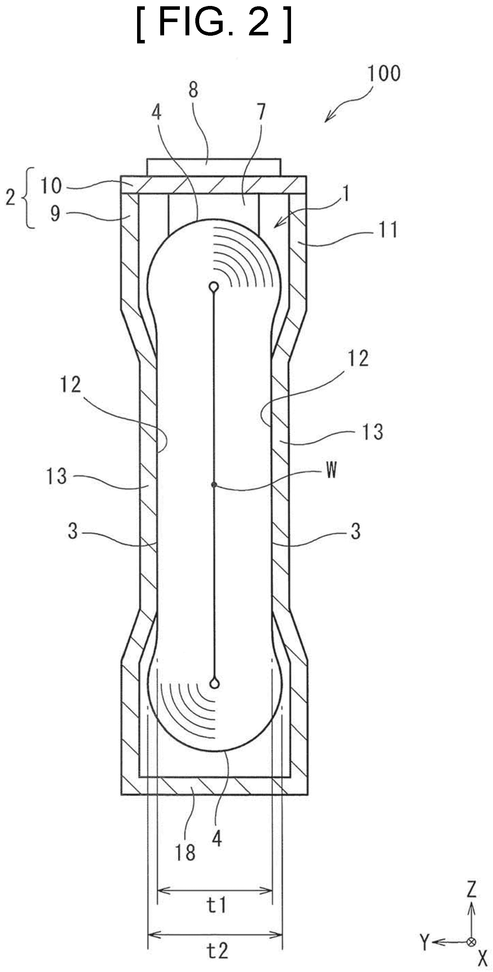

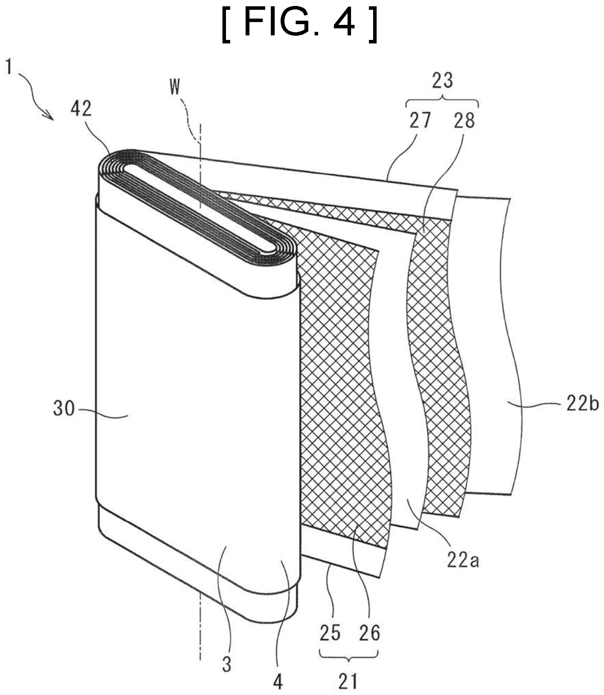

An energy storage device 100 according to one embodiment of the present invention, illustrated in FIGS. 1 and 2, includes an electrode body 1, a non-aqueous electrolyte, which is not illustrated, and a container 2 accommodating these. The energy storage device 100 is a non-aqueous electrolyte secondary battery which is an example of an energy storage device. In this embodiment, as will be described in detail below, the electrode body 1 is a flat wound electrode body formed by winding a positive electrode and a negative electrode in a state where they are stacked with a separator interposed therebetween. The wound electrode body 1 has a pair of flat surfaces 3 facing each other across a winding axis W, and a pair of curved surfaces 4 facing each other across the winding axis W (see FIGS. 2 and 4). Further, the electrode body 1 has a pair of end surfaces 42 perpendicular to the winding axis W (see FIG. 4). Further, at least a part of the non-aqueous electrolyte, which is not illustrated, exists in a state of being impregnated in the positive electrode, the negative electrode, and the separator constituting the electrode body 1. Note that as another embodiment, an electrolyte solution containing water or the like can be used instead of the non-aqueous electrolyte.

The energy storage device 100 of FIG. 1 includes a positive electrode connecting member 5, a positive electrode terminal 6, a negative electrode connecting member 7, and a negative electrode terminal 8 as other constituent members. The positive electrode of the electrode body 1 is electrically connected to the positive electrode terminal 6 via the positive electrode connecting member 5. The negative electrode of the electrode body 1 is electrically connected to the negative electrode terminal 8 via the negative electrode connecting member 7.

### (Container)

The container 2 is prismatic and has a substantially rectangular parallelepiped shape. The container 2 is composed of a container body 9 and a lid body 10. The container body 9 is a substantially rectangular parallelepiped tubular member having four side walls 11, one bottom plate 18, and an opening. The lid body 10 is a plate-like member closing the opening of the container body 9. The container 2 has a structure in which the container body 9 and the lid body 10 are welded or the like to seal the inside after the electrode body 1 and the like are housed therein.

The container body 9 is made of stainless steel. Since the container body 9 is made of stainless steel, it has excellent strength. As the stainless steel used for the container body 9, SUS304, SUS430, and the like specified in JIS standards can be exemplified. Another material other than stainless steel (for example, a metal other than stainless steel, a resin, etc.) may be used for a part of the container body 9. For example, the surface of the container body 9 may be coated with another material. It is preferable that 90% by mass or more of the material constituting the container body 9 is stainless steel, and it is more preferable that 99% by mass or more is stainless steel. Further, it is preferable that the lid body 10 is also made of stainless steel, in other words, it is preferable that the entire container 2 is made of stainless steel. 90% by mass or more of the material constituting the container 2 (the container body 9 and the lid body 10) may be stainless steel, and 99% by mass or more may be stainless steel.

The electrode body 1 is housed in the container 2 (container body 9) such that the pair of flat surfaces 3 respectively face a pair of side walls 11 facing each other among the four side walls 11 of the container 2 (usually, a pair of side walls having a large area among the four side walls 11). The container 2 has a protrusion 12 on the inner surface, provided at a location facing the flat surface 3 of the electrode body 1. That is, the container 2 has the pair of side walls 11 facing each other, each having the protrusion 12 on the inner surface. By providing such a protrusion 12 on the inner surface of the container 2, movement of the electrode body 1 due to vibration or the like, expansion of the electrode body 1 accompanying repetition of charge and discharge, and the like are suppressed, and as a result, deterioration of charge-discharge performance can be suppressed.

In the present embodiment, in a state where no external force is applied to the container 2, at least a part (for example, a central portion) of the flat surface 3 of the electrode body 1 is in direct contact with the protrusion 12 on the inner surface of the container 2. The protrusion 12 of the container 2 may be simply in contact with the flat surface 3 of the electrode body 1, or may be in a state of pressing the flat surface 3 of the electrode body 1. In a state where no external force is applied to the container 2, a ratio (t2/t1) of a maximum thickness t2 of the electrode body 1 to a distance t1 between the pair of protrusions 12 may be 1.00 or more, or may be 1.01 or more. This ratio (t2/t1) may be 1.2 or less, or may be 1.1 or less. As a result of the electrode body 1 gradually expanding due to repetition of charge and discharge, the protrusion 12 of the container 2 may come into a state of pressing the flat surface 3 of the electrode body 1. Note that the maximum thickness t2 of the electrode body 1 is defined as a maximum thickness of the electrode body in a state of being discharged to a discharge end voltage during normal use. Here, "during normal use" refers to a case where the energy storage device is used by adopting charge and discharge conditions recommended or designated for the energy storage device.

Note that whether or not at least a part of the flat surface 3 of the electrode body 1 is in contact with the protrusion 12 on the inner surface of the container 2 directly or via another member in a state where no external force is applied to the container 2 is confirmed by an X-ray cross-sectional image. Further, the distance t1 between the pair of protrusions 12 and the maximum thickness t2 of the electrode body 1 are also measured based on the X-ray cross-sectional image.

Further, in the present embodiment, the container 2 (container body 9) has, on the outer surface, a recess 13 along the shape of the protrusion 12 on the inner surface. That is, the pair of side walls 11 of the container 2 (container body 9) are plate bodies having a substantially uniform thickness, and have a shape in which a central portion thereof is recessed from the outside toward the inside. It is preferable that the protrusion 12 and the recess 13 are substantially rectangular in a front view (viewed in the Y direction). Further, a ratio of an area of one protrusion 12 to an area of one flat surface 3 of the electrode body 1 may be, for example, 0.1 or more and 0.9 or less, or may be 0.3 or more and 0.8 or less (for example, 0.5 or more and 0.8 or less).

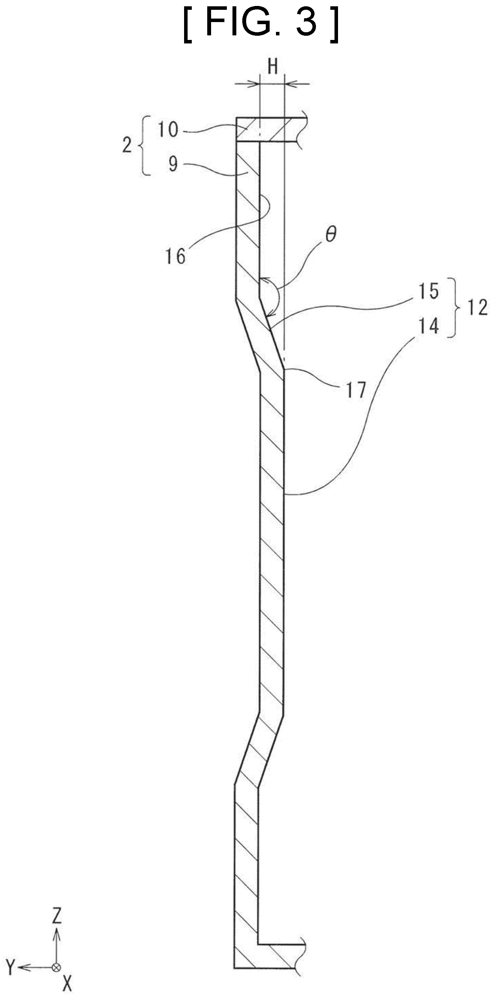

As illustrated in FIG. 3, the protrusion 12 on the inner surface of the container 2 in the present embodiment is composed of a flat surface 14 and a slope 15 continuous with the flat surface 14. Further, the slope 15 is continuous with a surface 16 other than the protrusion 12 on the inner surface of the container 2. Only the flat surface 14 of the protrusion 12 may be in contact with the flat surface 3 of the electrode body 1, or the slope 15 may also be in contact with the flat surface 3 or the like of the electrode body 1 together with the flat surface 14. The surface 16 other than the protrusion 12 on the inner surface of the container 2 may be in contact with the flat surface 3 or the like of the electrode body 1.

A height H of the protrusion 12 on the inner surface of the container 2 is appropriately set according to the size or the like of the container 2, but is preferably, for example, 1 mm or more and 10 mm or less, and more preferably 1.5 mm or more and 4 mm or less. An angle θ formed by the surface 16 other than the protrusion 12 on the inner surface of the container 2 and the slope 15 is preferably 160° or more and 178° or less, and more preferably 170° or more and 176° or less. When the height H of the protrusion 12 and the angle θ formed by the surface 16 other than the protrusion 12 and the slope 15 are in the above ranges, while the above-mentioned effect by the protrusion 12 can be sufficiently exhibited, the electrode body is likely to get caught on the protrusion in the case of a conventional electrode body when inserting the electrode body; therefore, the technical significance of enhancing insertability by providing, on the electrode body, the outermost layer containing inorganic particles as a main component is particularly significant.

A corner portion 17 formed by the flat surface 14 and the slope 15 is preferably chamfered. A radius of curvature at the corner portion 17 is preferably 5 mm or more and 100 mm or less, and more preferably 10 mm or more and 50 mm or less. By chamfering the corner portion 17, the insertability of the electrode body 1 can be further enhanced.

### (Electrode Body)

The electrode body 1 is a flat wound electrode body. As illustrated in FIG. 4, the electrode body 1 is formed by stacking a strip-shaped positive electrode 21, a strip-shaped first separator 22a, a strip-shaped negative electrode 23, and a strip-shaped second separator 22b in this order, and winding them in a longitudinal direction with the second separator 22b on the outside. Such a flat wound electrode body 1 has, as described above, the pair of flat surfaces 3 facing each other across the winding axis W, the pair of curved surfaces 4 facing each other across the winding axis W, and the pair of end surfaces 42 perpendicular to the winding axis W. The electrode body 1 is housed in the container 2 such that the winding axis W is parallel to the lid body 10 of the container 2 (X direction). That is, the pair of curved surfaces 4 of the electrode body 1 face the bottom plate 18 or the lid body 10 of the container body 9.

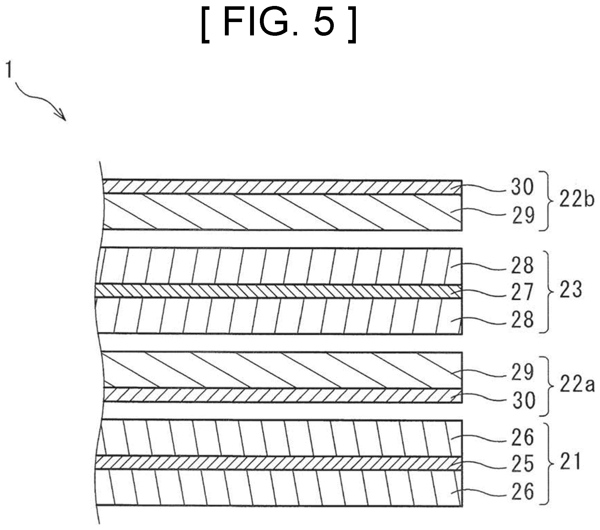

As illustrated in FIGS. 4 and 5, the positive electrode 21 has a strip-shaped positive electrode base material 25 and positive electrode active material layers 26 respectively laminated on both surfaces of the positive electrode base material 25. The negative electrode 23 has a strip-shaped negative electrode base material 27 and negative electrode active material layers 28 respectively laminated on both surfaces of the negative electrode base material 27. The separator 22 (22a, 22b) has a strip-shaped base material layer 29 and a layer 30 containing inorganic particles as a main component (hereinafter, the "layer containing inorganic particles as a main component" is also referred to as an "inorganic layer") laminated on one surface of the base material layer 29. The separator 22 (22a, 22b) is stacked such that the inorganic layer 30 faces the positive electrode 21. Note that as the separator 22 (22a, 22b), a separator in which the inorganic layers 30 are respectively laminated on both surfaces of the base material layer 29 may be used. Details of each constituent element will be described below.

In the wound electrode body 1 configured as illustrated in FIGS. 4 and 5, the outermost layer is the inorganic layer 30 of the second separator 22b. Thus, the electrode body 1 has the outermost layer containing inorganic particles as a main component. This outermost layer is a part of the separator 22, and specifically, is the inorganic layer 30 of the second separator 22b. Note that in the production of the wound electrode body 1 of FIG. 4, a structure in which only the separator 22b is stacked by winding only the second separator 22b for a plurality of turns at the final stage of winding may be adopted.

As another embodiment, an electrode body wound in a state where the inorganic layer of the separator is stacked so as to face the negative electrode can also be used. Also in this case, the electrode body may be obtained by winding such that the outermost layer of the obtained electrode body becomes the inorganic layer of the separator. As still another embodiment, the outermost layer of the electrode body may be constituted by a member other than the inorganic layer of the separator. For example, an electrode body may be used in which an electrode body main body composed of a positive electrode, a negative electrode, and a separator consisting only of a resin base material layer is covered with an insulating film having an inorganic layer. In this case, by covering the electrode body main body with the insulating film such that the inorganic layer is located on the outer surface, an electrode body having an outermost layer containing inorganic particles as a main component can be obtained.

In the energy storage device 100, since the outermost layer of the electrode body 1 is the inorganic layer 30 as described above, although it is an energy storage device including the stainless steel container 2 having the protrusion 12 on the inner surface, it is excellent in the insertability of the electrode body 1 in the manufacturing process. Further, in the energy storage device 100 of the present embodiment, the winding axis W of the electrode body 1 is parallel to the lid body 10 of the container 2. In this case, when inserting the electrode body 1 into the container 2, it is inserted into the container body 9 from the curved surface 4 of the electrode body 1, and the curved surface 4 comes into contact with the protrusion 12 first, so that the insertability is more excellent.

### <Energy Storage Device 101>

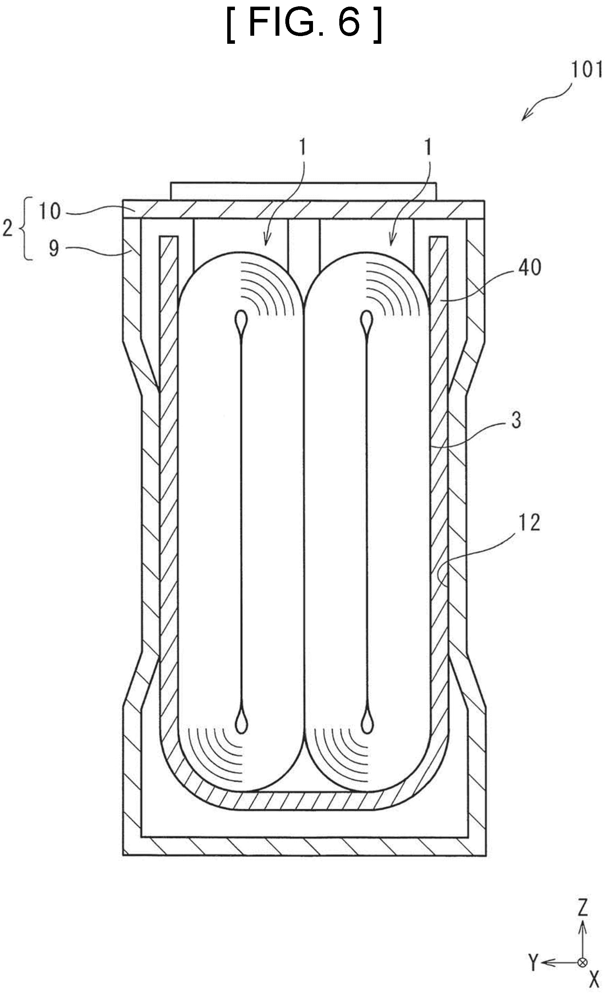

An energy storage device 101 according to another embodiment illustrated in FIG. 6 includes two electrode bodies 1, a non-aqueous electrolyte, which is not illustrated, and a container 2 accommodating these. The energy storage device 101 further includes an insulating member 40 interposed between the two electrode bodies 1 and the container 2. The energy storage device 101 is substantially the same as the energy storage device 100 described above, except that the two electrode bodies 1 are housed and the insulating member 40 is further provided. Also in the energy storage device 101, in a state where no external force is applied to the container 2, it is preferable that at least a part (for example, a central portion) of the flat surface 3 of the electrode body 1 is in contact with the protrusion 12 on the inner surface of the container 2 via the insulating member 40 which is another member.

The insulating member 40 may be one formed in a bag shape so as to wrap the two electrode bodies 1 (insulating bag). The insulating member 40 is formed of an electrically insulating material. The insulating member 40 may be formed of, for example, a resin film. Examples of the material of the insulating member 40 include polyolefins such as polyethylene and polypropylene, polyimide, aramid, and the like, and polyolefins are preferable. In the energy storage device 101, since the insulating member 40 is provided between the electrode body 1 and the container 2, the electrical insulation between the electrode body 1 and the container 2 is high, and movement of the electrode body 1 due to vibration or the like is also further suppressed. Even in the energy storage device 101 provided with such an insulating member 40, the effect of being excellent in insertability of the electrode body in the manufacturing process can be obtained.

In the energy storage device 101, a plurality of electrode bodies 1 are housed in the container 2. Generally, in the case of an energy storage device in which a plurality of electrode bodies are housed in a container, a positional displacement may occur between the plurality of electrode bodies due to a part of the plurality of electrode bodies getting caught on a protrusion on an inner surface of the container at the time of insertion. Therefore, by applying the present invention in which the insertability of the electrode body is enhanced to an energy storage device in which a plurality of electrode bodies are housed in a container, an effect that positional displacement between the plurality of electrode bodies can be suppressed is also exhibited.

### <Energy Storage Device 102>

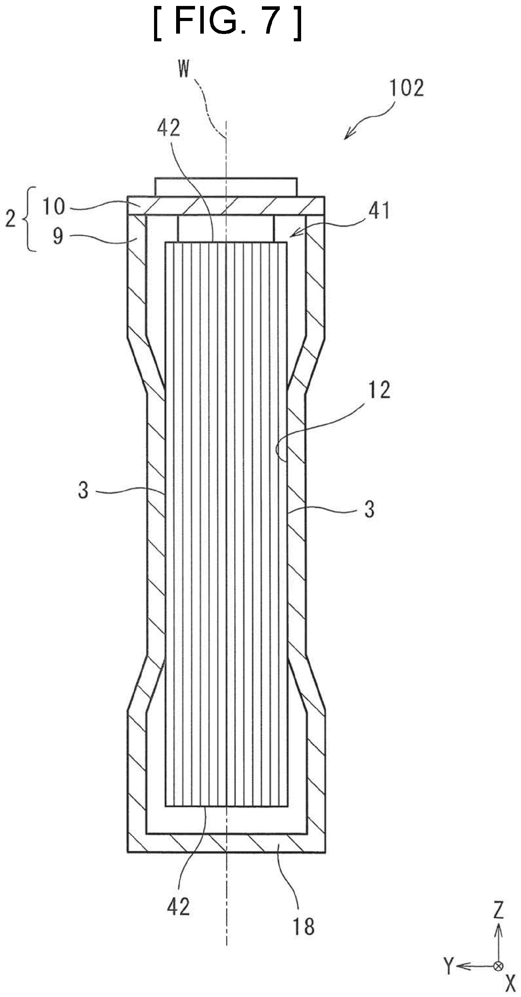

An energy storage device 102 according to another embodiment illustrated in FIG. 7 includes an electrode body 41, a non-aqueous electrolyte, which is not illustrated, and a container 2 accommodating these. The container 2 in the present embodiment has the same structure as the container 2 of FIG. 1 and the like. That is, the container 2 has a container body 9 having an opening and a lid body 10 closing this opening. Further, the electrode body 41 is a flat wound electrode body formed by winding a positive electrode and a negative electrode in a state where they are stacked with a separator interposed therebetween, similarly to the electrode body 1 of FIG. 1 and the like. The electrode body 41 also has a pair of flat surfaces 3 facing each other across a winding axis W, a pair of curved surfaces (not illustrated in FIG. 7) facing each other across the winding axis W, and a pair of end surfaces 42 perpendicular to the winding axis W. However, in the present embodiment, the electrode body 41 is housed in the container 2 such that the winding axis W of the electrode body 41 is perpendicular to the lid body 10 of the container 2 (Z direction). That is, the pair of end surfaces 42 of the electrode body 41 face the bottom plate 18 or the lid body 10 of the container body 9. Note that the end surface 42 of the electrode body 41 is a surface perpendicular to the winding axis W in the electrode body 41, and is a surface where end surfaces of the positive electrode and the negative electrode are exposed. The energy storage device 102 of the present embodiment is substantially the same as the energy storage device 100 described above, except that the orientation of the arrangement of the electrode body 41 is different from that of the electrode body 1.

In the case of the energy storage device 102 of the present embodiment, when inserting the electrode body 41 into the container 2, it is inserted into the container body 9 from the end surface 42 of the electrode body 41, and the end surface 42 comes into contact with the protrusion 12 first. Usually, in such a case, when inserting the electrode body 41, the electrode body 41 is likely to get caught on the protrusion 12, and further, if it gets caught, defects are likely to occur in the electrode body 41; therefore, the technical significance of enhancing insertability by providing, on the electrode body 41, the outermost layer containing inorganic particles as a main component is significant.

Hereinafter, main constituent members in the energy storage device according to one embodiment of the present invention will be described in detail.

### (Positive Electrode)

The positive electrode has a positive electrode base material and a positive electrode active material layer disposed on the positive electrode base material directly or via an arbitrary intermediate layer, as described above.

The positive electrode base material has conductivity. Whether or not it has "conductivity" is determined with a volume resistivity of 10⁻² Ω·cm measured in accordance with JIS-H-0505 (1975) as a threshold. As the material of the positive electrode base material, a metal such as aluminum, titanium, tantalum, or stainless steel, or an alloy thereof is used. Among these, aluminum or an aluminum alloy is preferable from the viewpoints of potential resistance, high conductivity, and cost. Examples of the positive electrode base material include a foil, a vapor-deposited film, a mesh, a porous material, and the like, and a foil is preferable from the viewpoint of cost. Therefore, an aluminum foil or an aluminum alloy foil is preferable as the positive electrode base material. Examples of aluminum or aluminum alloys include A1085, A3003, AlN30, and the like specified in JIS-H-4000 (2014) or JIS-H-4160 (2006).

The average thickness of the positive electrode base material is preferably 3 µm or more and 50 µm or less, more preferably 5 µm or more and 40 µm or less, further preferably 8 µm or more and 30 µm or less, and particularly preferably 10 µm or more and 25 µm or less. By setting an average thickness of the positive electrode base material within the above range, it is possible to increase energy density per unit volume of the energy storage device while increasing the strength of the positive electrode base material.

The intermediate layer is an arbitrary layer disposed between the positive electrode base material and the positive electrode active material layer. The intermediate layer reduces contact resistance between the positive electrode base material and the positive electrode active material layer by containing a conductive agent such as carbon particles. The configuration of the intermediate layer is not particularly limited, and includes, for example, a binder and a conductive agent.

The positive electrode active material layer contains a positive electrode active material. The positive electrode active material layer contains optional components such as a conductive agent, a binder, a thickener, and a filler, as necessary.

The positive electrode active material can be appropriately selected from known positive electrode active materials. As a positive electrode active material for a lithium ion secondary battery, a material capable of absorbing and releasing lithium ions is usually used. Examples of the positive electrode active material include lithium transition metal composite oxides having an α-NaFeO₂ type crystal structure, lithium transition metal composite oxides having a spinel type crystal structure, polyanion compounds, chalcogen compounds, sulfur, and the like. Examples of the lithium transition metal composite oxides having an α-NaFeO₂ type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < γ < 1, 0 < 1-x-γ), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1, 0 < 1-x-γ), Li[LiₓNi_{γ}Mn_{β}Co_{(1-x-γ-β)}]O₂ (0 ≤ x < 0.5, 0 < γ, 0 < β, 0.5 < γ+β < 1, 0 < 1-x-γ-β), Li[LiₓNi_{γ}CopAl_{(1-x-γ-β)}]O₂ (0 ≤ x < 0.5, 0 < y, 0 < β, 0.5 < γ+β < 1, 0 < 1-x-γ-β), and the like. Examples of the lithium transition metal composite oxides having a spinel type crystal structure include LiₓMn₂O₄, LiₓNi_{γ}Mn_{(2-γ)}O₄, and the like. Examples of the polyanion compounds include LiFePO₄, LiMnPO₄, LiNiPO₄, LiCoPO₄, Li₃V₂(PO₄)₃, Li₂MnSiO₄, Li₂CoPO₄F, and the like. Examples of the chalcogen compounds include titanium disulfide, molybdenum disulfide, molybdenum dioxide, and the like. Atoms or polyanions in these materials may be partially substituted with atoms or anion species composed of other elements. The surfaces of these materials may be coated with other materials. In the positive electrode active material layer, one type of these materials may be used alone, or two or more types may be used in a mixture.

The positive electrode active material is usually in the form of particles (powder). An average particle size of the positive electrode active material is preferably, for example, 0.1 µm or more and 20 µm or less. By setting the average particle size of the positive electrode active material to be equal to or larger than the above lower limit, the production or handling of the positive electrode active material becomes easy. By setting the average particle size of the positive electrode active material to be equal to or smaller than the above upper limit, electron conductivity of the positive electrode active material layer is improved. Note that when a composite of the positive electrode active material and other materials is used, the average particle size of the composite is regarded as the average particle size of the positive electrode active material. The "average particle size" means a value at which a volume-based integrated distribution calculated in accordance with JIS-Z-8819-2 (2001) is 50%, based on a particle size distribution measured by a laser diffraction/scattering method for a diluted solution obtained by diluting particles with a solvent in accordance with JIS-Z-8825 (2013).

In order to obtain a powder having a predetermined particle size, a pulverizer, a classifier, or the like is used. Examples of a pulverization method include a method using a mortar, a ball mill, a sand mill, a vibration ball mill, a planetary ball mill, a jet mill, a counter jet mill, a swirling airflow type jet mill, a sieve, or the like. At the time of pulverization, wet pulverization in which water or an organic solvent such as hexane coexists can also be used. As a classification method, a sieve, an air classifier, or the like is used as necessary in both dry and wet forms.

The content of the positive electrode active material in the positive electrode active material layer is preferably 50% by mass or more and 99% by mass or less, more preferably 70% by mass or more and 98% by mass or less, and further preferably 80% by mass or more and 95% by mass or less. By setting the content of the positive electrode active material within the above range, it is possible to achieve both high energy density and manufacturability of the positive electrode active material layer.

The conductive agent is not particularly limited as long as it is a material having conductivity. Examples of such a conductive agent include carbonaceous materials, metals, conductive ceramics, and the like. Examples of the carbonaceous materials include graphite, non-graphitic carbon, graphene-based carbon, and the like. Examples of the non-graphitic carbon include carbon nanofibers, pitch-based carbon fibers, carbon black, and the like. Examples of the carbon black include furnace black, acetylene black, Ketjen black, and the like. Examples of the graphene-based carbon include graphene, carbon nanotubes (CNTs), fullerenes, and the like. Examples of forms of the conductive agent include a powder form, a fibrous form, and the like. As the conductive agent, one type of these materials may be used alone, or two or more types may be used in a mixture. Further, these materials may be used in combination. For example, a material obtained by compounding carbon black and CNT may be used. Among these, carbon black is preferable, and acetylene black is particularly preferable, from the viewpoints of electron conductivity and coatability.

The content of the conductive agent in the positive electrode active material layer is preferably 1% by mass or more and 10% by mass or less, and more preferably 3% by mass or more and 9% by mass or less. By setting the content of the conductive agent within the above range, the energy density of the energy storage device can be increased.

Examples of the binder include: thermoplastic resins such as fluororesins (polytetrafluoroethylene (PTFE), polyvinylidene fluoride (PVDF), etc.), polyethylene, polypropylene, polyacrylic polymers, and polyimide; elastomers such as ethylenepropylene-diene rubber (EPDM), sulfonated EPDM, styrene butadiene rubber (SBR), and fluororubber; polysaccharide polymers; and the like.

The content of the binder in the positive electrode active material layer is preferably 1% by mass or more and 10% by mass or less, and more preferably 3% by mass or more and 9% by mass or less. By setting the content of the binder within the above range, the positive electrode active material can be stably held.

Examples of the thickener include polysaccharide polymers such as carboxymethyl cellulose (CMC) and methyl cellulose. When the thickener has a functional group that reacts with lithium or the like, this functional group may be deactivated in advance by methylation or the like. When the thickener is used, the content of the thickener in the positive electrode active material layer is preferably 5% by mass or less, and more preferably 1% by mass or less. The technology disclosed herein can be preferably implemented in an aspect in which the positive electrode active material layer does not contain a thickener.

The filler is not particularly limited. Examples of the filler include: polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; hardly soluble ionic crystals such as calcium fluoride, barium fluoride, and barium sulfate; nitrides such as aluminum nitride and silicon nitride; and substances derived from mineral resources such as talc, montmorillonite, boehmite, zeolite, apatite, kaolin, mullite, spinel, olivine, sericite, bentonite, and mica, or artificial products thereof. When the filler is used, the content of the filler in the positive electrode active material layer is preferably 5% by mass or less, and more preferably 1% by mass or less. The technology disclosed herein can be preferably implemented in an aspect in which the positive electrode active material layer does not contain a filler.

The positive electrode active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Nb, and W as components other than the positive electrode active material, the conductive agent, the binder, the thickener, and the filler.

### (Negative Electrode)

The negative electrode has a negative electrode base material and a negative electrode active material layer disposed on the negative electrode base material directly or via an arbitrary intermediate layer, as described above. A configuration of the intermediate layer is not particularly limited, and can be selected from, for example, the configurations exemplified for the positive electrode described above.

The negative electrode base material has conductivity. As the material of the negative electrode base material, a metal such as copper, nickel, stainless steel, nickel-plated steel, or aluminum, or an alloy thereof, a carbonaceous material, or the like is used. Among these, copper or a copper alloy is preferable. Examples of the negative electrode base material include a foil, a vapor-deposited film, a mesh, a porous material, and the like, and a foil is preferable from the viewpoint of cost. Therefore, a copper foil or a copper alloy foil is preferable as the negative electrode base material. Examples of the copper foil include rolled copper foil, electrolytic copper foil, and the like.

The average thickness of the negative electrode base material is preferably 2 µm or more and 35 µm or less, more preferably 3 µm or more and 30 µm or less, further preferably 4 µm or more and 25 µm or less, and particularly preferably 5 µm or more and 20 µm or less. By setting the average thickness of the negative electrode base material within the above range, it is possible to increase the energy density per unit volume of the energy storage device while increasing the strength of the negative electrode base material.

The negative electrode active material layer contains a negative electrode active material. The negative electrode active material layer contains optional components such as a conductive agent, a binder, a thickener, and a filler, as necessary. The optional components such as a conductive agent, a binder, a thickener, and a filler can be selected from the materials exemplified for the positive electrode described above.

The negative electrode active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W as components other than the negative electrode active material, the conductive agent, the binder, the thickener, and the filler.

The negative electrode active material can be appropriately selected from known negative electrode active materials. As the negative electrode active material for a lithium ion secondary battery, a material capable of absorbing and releasing lithium ions is usually used. Examples of the negative electrode active material include: metallic Li; metals or semimetals such as Si and Sn; metal oxides or semimetal oxides such as Si oxide, Ti oxide, and Sn oxide; titanium-containing oxides such as Li₄Ti₅O₁₂, LiTiO₂, and TiNb₂O₇; polyphosphate compounds; silicon carbide; and carbon materials such as graphite and non-graphitic carbon (graphitizable carbon or non-graphitizable carbon). Among these materials, graphite and non-graphitic carbon are preferable. In the negative electrode active material layer, one type of these materials may be used alone, or two or more types may be used in a mixture.

"Graphite" refers to a carbon material having an average lattice plane spacing (d002) of a (002) plane, as determined by an X-ray diffraction method, of 0.33 nm or more and less than 0.34 nm before charge/discharge or in a discharged state. Examples of the graphite include natural graphite and artificial graphite. Artificial graphite is preferable from the viewpoint that a material having stable physical properties can be obtained.

"Non-graphitic carbon" refers to a carbon material having an average lattice plane spacing (d002) of the (002) plane, as determined by an X-ray diffraction method, of 0.34 nm or more and 0.42 nm or less before charge/discharge or in a discharged state. Examples of the non-graphitic carbon include non-graphitizable carbon and graphitizable carbon. Examples of the non-graphitic carbon include resin-derived materials, petroleum pitch or materials derived from petroleum pitch, petroleum coke or materials derived from petroleum coke, plant-derived materials, alcohol-derived materials, and the like.

Here, the "discharged state" means a state in which discharge has been performed such that lithium ions capable of being absorbed and released in association with charge and discharge are sufficiently released from a carbon material which is the negative electrode active material. For example, it is a state where an open circuit voltage is 0.7 V or more in a half cell using, as a working electrode, a negative electrode containing a carbon material as a negative electrode active material, and as a counter electrode, metallic Li.

"Non-graphitizable carbon" refers to a carbon material in which the d002 is 0.36 nm or more and 0.42 nm or less.

"Graphitizable carbon" refers to a carbon material in which the d002 is 0.34 nm or more and less than 0.36 nm.

The negative electrode active material is usually in the form of particles (powder). An average particle size of the negative electrode active material can be, for example, 1 nm or more and 100 µm or less. When the negative electrode active material is a carbon material, a titanium-containing oxide, or a polyphosphate compound, the average particle size thereof may be 1 µm or more and 100 µm or less. When the negative electrode active material is Si, Sn, Si oxide, Sn oxide, or the like, the average particle size thereof may be 1 nm or more and 1 µm or less. By setting the average particle size of the negative electrode active material to be equal to or larger than the above lower limit, the production or handling of the negative electrode active material becomes easy. By setting the average particle size of the negative electrode active material to be equal to or smaller than the above upper limit, electron conductivity of the negative electrode active material layer is improved. In order to obtain a powder having a predetermined particle size, a pulverizer, a classifier, or the like is used. The pulverization method and the classification method can be selected from, for example, the methods exemplified for the positive electrode described above. When the negative electrode active material is a metal such as metallic Li, the negative electrode active material layer may be in a foil form.

The content of the negative electrode active material in the negative electrode active material layer is preferably 60% by mass or more and 99% by mass or less, and more preferably 90% by mass or more and 98% by mass or less. By setting the content of the negative electrode active material within the above range, it is possible to achieve both high energy density and manufacturability of the negative electrode active material layer.

### (Separator)

The separator can be appropriately selected from known separators. As the separator, for example, a separator composed only of a base material layer, a separator in which an inorganic layer is formed on one surface or both surfaces of a base material layer, or the like can be used. As described above, when a separator having an inorganic layer provided on at least one surface of a base material layer is used, an electrode body having an outermost layer containing inorganic particles as a main component can be efficiently produced by winding the positive electrode and the negative electrode in a state where they are stacked with the separator interposed therebetween, and productivity is high.

Examples of forms of the base material layer of the separator include a woven fabric, a nonwoven fabric, a porous resin film, and the like. Among these forms, a porous resin film is preferable from the viewpoint of strength, and a nonwoven fabric is preferable from the viewpoint of liquid retention of the non-aqueous electrolyte. As a material of the base material layer of the separator, for example, polyolefins such as polyethylene and polypropylene are preferable from the viewpoint of a shutdown function, and for example, polyimide, aramid, and the like are preferable from the viewpoint of oxidative decomposition resistance. A composite material of these resins may be used as the base material layer of the separator.

The inorganic layer usually contains inorganic particles as a main component and a binder. The inorganic particles contained in the inorganic layer preferably have a mass loss of 5% or less when heated from room temperature to 500 °C in the atmosphere, and more preferably have a mass loss of 5% or less when heated from room temperature to 800 °C in the atmosphere. Further, the inorganic particles are usually non-conductive particles. Examples of the inorganic compound forming the inorganic particles include: oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; hardly soluble ionic crystals such as calcium fluoride, barium fluoride, and barium titanate; covalently bonded crystals such as silicon and diamond; and substances derived from mineral resources such as talc, montmorillonite, boehmite, zeolite, apatite, kaolin, mullite, spinel, olivine, sericite, bentonite, and mica, or artificial products thereof. As the inorganic compound, a simple substance or a composite of these substances may be used alone, or two or more types may be used in a mixture. Among these inorganic compounds, silicon oxide, aluminum oxide, or aluminosilicate is preferable from the viewpoint of safety of the energy storage device. Further, from the viewpoint of enhancing the insertability of the electrode body when the inorganic layer of the separator is the outermost layer of the electrode body, barium sulfate, silicon oxide, aluminum oxide, or aluminosilicate is preferable.

The content of the inorganic particles in the inorganic layer is preferably 50% by mass or more and 99% by mass or less, and more preferably 70% by mass or more and 97% by mass or less. By ensuring that the content of the inorganic particles in the inorganic layer is within the above range, it is possible to enhance the insertability of the electrode body when the inorganic layer of the separator is the outermost layer of the electrode body, in addition to heat resistance and the like.

As the binder in the inorganic layer, those exemplified as the binder for the positive electrode active material layer and the like can be used. The content of the binder in the inorganic layer is preferably, for example, 1% by mass or more and 50% by mass or less, and more preferably 3% by mass or more and 30% by mass or less.

Note that when the outermost layer of the electrode body is a member other than the inorganic layer of the separator, the member may be porous or non-porous, but it is preferably porous from the viewpoint of ensuring flowability of the electrolyte solution and the like. Even when the outermost layer of the electrode body is a member other than the inorganic layer of the separator, the specific form and preferred form of the outermost layer of the electrode body are the same as the specific form and preferred form of the inorganic layer of the separator described above.

A porosity of the separator is preferably 80% by volume or less from the viewpoint of strength, and is preferably 20% by volume or more from the viewpoint of discharge performance. Here, "porosity" is a volume-based value, and means a value measured with a mercury porosimeter.

### (Non-aqueous Electrolyte)

The non-aqueous electrolyte can be appropriately selected from known non-aqueous electrolytes. A non-aqueous electrolyte solution may be used as the non-aqueous electrolyte. The non-aqueous electrolyte solution contains a non-aqueous solvent and an electrolyte salt dissolved in this non-aqueous solvent.

The non-aqueous solvent can be appropriately selected from known non-aqueous solvents. Examples of the non-aqueous solvent include cyclic carbonates, chain carbonates, carboxylic acid esters, phosphoric acid esters, sulfonic acid esters, ethers, amides, nitriles, and the like. As the non-aqueous solvent, those in which a part of hydrogen atoms contained in these compounds are substituted with halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, 1,2-diphenylvinylene carbonate, and the like. Among these, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, bis(trifluoroethyl) carbonate, and the like. Among these, EMC is preferable.

As the non-aqueous solvent, it is preferable to use a cyclic carbonate or a chain carbonate, and it is more preferable to use a cyclic carbonate and a chain carbonate in combination. By using the cyclic carbonate, dissociation of the electrolyte salt can be promoted to improve ionic conductivity of the non-aqueous electrolyte solution. By using the chain carbonate, viscosity of the non-aqueous electrolyte solution can be kept low. When the cyclic carbonate and the chain carbonate are used in combination, a volume ratio of the cyclic carbonate to the chain carbonate (cyclic carbonate : chain carbonate) is preferably in a range of, for example, 5:95 to 50:50.

The electrolyte salt can be appropriately selected from known electrolyte salts. Examples of the electrolyte salt include lithium salts, sodium salts, potassium salts, magnesium salts, onium salts, and the like. Among these, lithium salts are preferable.

Examples of the lithium salts include: inorganic lithium salts such as LiPF₆, LiPO₂F₂, LiBF₄, LiClO₄, and LiN(SO₂F)₂; lithium oxalate salts such as lithium bis(oxalate)borate (LiBOB), lithium difluorooxalate borate (LiFOB), and lithium difluorobis(oxalate)phosphate (LiFOP); lithium salts having a halogenated hydrocarbon group such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃; and the like. Among these, inorganic lithium salts are preferable, and LiPF₆ is more preferable.

The content of the electrolyte salt in the non-aqueous electrolyte solution is preferably 0.1 mol/dm³ or more and 2.5 mol/dm³ or less, more preferably 0.3 mol/dm³ or more and 2.0 mol/dm³ or less, further preferably 0.5 mol/dm³ or more and 1.7 mol/dm³ or less, and particularly preferably 0.7 mol/dm³ or more and 1.5 mol/dm³ or less, at 20 °C and 1 atmosphere. By setting the content of the electrolyte salt within the above range, the ionic conductivity of the non-aqueous electrolyte solution can be increased.

The non-aqueous electrolyte solution may contain an additive in addition to the non-aqueous solvent and the electrolyte salt. Examples of the additive include: aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partial halides of the above aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methyl vinylene carbonate, ethyl vinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, tetrakistrimethylsilyl titanate, lithium monofluorophosphate, lithium difluorophosphate, and the like. These additives may be used alone, or two or more types may be used in a mixture.

The content of the additive contained in the non-aqueous electrolyte solution is preferably 0.01% by mass or more and 10% by mass or less, more preferably 0.1% by mass or more and 7% by mass or less, further preferably 0.2% by mass or more and 5% by mass or less, and particularly preferably 0.3% by mass or more and 3% by mass or less with respect to the total mass of the non-aqueous electrolyte solution. By setting the content of the additive within the above range, capacity retention performance or cycle performance after high-temperature storage can be improved, or safety can be further improved.

As the non-aqueous electrolyte, a solid electrolyte may be used, or a non-aqueous electrolyte solution and a solid electrolyte may be used in combination.

The solid electrolyte can be selected from arbitrary materials having ionic conductivity of lithium, sodium, calcium, or the like and being solid at room temperature (for example, 15 °C to 25 °C). Examples of the solid electrolyte include sulfide solid electrolytes, oxide solid electrolytes, nitride solid electrolytes, polymer solid electrolytes, and the like.

Examples of the sulfide solid electrolytes include, in the case of a lithium ion secondary battery, Li₂S-P₂S₅, Lil-Li₂S-P₂S₅, Li₁₀Ge-P₂S₁₂, and the like.

The shape of the energy storage device according to the embodiment of the present invention is not particularly limited. The energy storage device may be, for example, a flat battery, a coin battery, a button battery, or the like, in addition to the prismatic battery illustrated in FIG. 1 and the like.

### <Method for Manufacturing Energy Storage Device>

The method for manufacturing the energy storage device of the present embodiment can be appropriately selected from known methods, but the following method is preferable. That is, a method for manufacturing an energy storage device according to one embodiment of the present invention includes: preparing an electrode body having a flat surface; preparing a stainless steel container having a protrusion on an inner surface; and inserting the electrode body into the container such that the flat surface of the electrode body and the protrusion on the inner surface of the container face each other, wherein the electrode body has an outermost layer containing inorganic particles as a main component. The manufacturing method may further include preparing a non-aqueous electrolyte, accommodating the non-aqueous electrolyte in the container, and the like.

Preparing the electrode body having the flat surface includes, for example, preparing a positive electrode, a negative electrode, and a separator, and forming an electrode body by stacking or winding the positive electrode and the negative electrode with the separator interposed therebetween. For example, by using a separator having an inorganic layer as the separator as described above and winding it such that the inorganic layer becomes the outermost layer, an electrode body having an outermost layer containing inorganic particles as a main component can be efficiently produced.

In inserting the electrode body into the container, the electrode body is usually inserted from the opening of the container body. At this time, the electrode body may be inserted in an orientation in which the winding axis of the electrode body is parallel to the opening, or the electrode body may be inserted in an orientation in which the winding axis of the electrode body is perpendicular to the opening. In the former case, it becomes an energy storage device in which the electrode body is disposed in the container like the energy storage device 100 illustrated in FIG. 1 and the like. In the latter case, it becomes an energy storage device in which the electrode body is disposed in the container like the energy storage device 102 illustrated in FIG. 7.

Accommodating the non-aqueous electrolyte in the container can be appropriately selected from known methods. For example, when a non-aqueous electrolyte solution is used as the non-aqueous electrolyte, the non-aqueous electrolyte solution may be injected from an injection port formed in the container, and then the injection port may be sealed.

### <Energy Storage Apparatus>

The energy storage device of the present embodiment can be mounted as an energy storage unit (battery module) configured by assembling a plurality of energy storage devices on a power source for automobiles such as electric vehicles (EV), hybrid vehicles (HEV), and plug-in hybrid vehicles (PHEV), a power source for electronic devices such as personal computers and communication terminals, or a power source for power storage, and the like. In this case, it is sufficient that the technology of the present invention is applied to at least one energy storage device included in the energy storage unit.

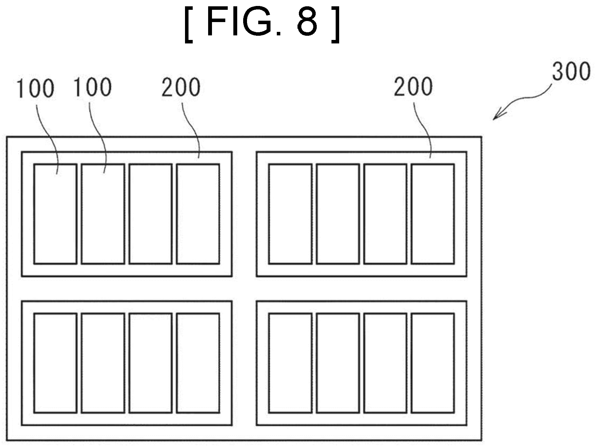

FIG. 8 illustrates an example of an energy storage apparatus 300 formed by further assembling energy storage units 200 in which two or more electrically connected energy storage devices 100 are assembled. The energy storage apparatus 300 may include a bus bar (not illustrated) for electrically connecting two or more energy storage devices 100, a bus bar (not illustrated) for electrically connecting two or more energy storage units 200, and the like. The energy storage unit 200 or the energy storage apparatus 300 may include a state monitoring device (not illustrated) for monitoring the state of one or more energy storage devices.

### <Other Embodiments>

The energy storage device and the method for manufacturing an energy storage device of the present invention are not limited to the above embodiments, and various modifications may be made without departing from the gist of the present invention. For example, a configuration of one embodiment can be added to a configuration of another embodiment, or a part of a configuration of one embodiment can be replaced with a configuration of another embodiment or a well-known technology. Furthermore, a part of a configuration of one embodiment can be deleted. In addition, a well-known technology can be added to a configuration of one embodiment.

In the above embodiment, the case where the energy storage device is used as a chargeable and dischargeable non-aqueous electrolyte secondary battery (for example, a lithium ion secondary battery) has been described, but the type, shape, size, capacity, and the like of the energy storage device are arbitrary. The present invention can also be applied to capacitors such as various secondary batteries, electric double layer capacitors, or lithium ion capacitors.

In the above embodiment, the case where the electrode body is a wound electrode body has been mainly described, but the configuration of the electrode body is not limited as long as it has a flat surface and an outermost layer containing inorganic particles as a main component. The electrode body may be a stacked electrode body in which a plurality of positive electrodes, a plurality of negative electrodes, and a plurality of separators are stacked, an electrode body in which at least one of a positive electrode and a negative electrode is stacked in a zigzag shape, or the like.

In the above embodiment, the form in which the container has, on the outer surface, a recess along the shape of the protrusion on the inner surface has been described, but the container may not have, on the outer surface, a recess along the shape of the protrusion on the inner surface. For example, by making a part of the side wall of the container thick so that a protrusion is formed on the inner surface, a container having a protrusion on the inner surface and no recess on the outer surface can be obtained.

### INDUSTRIAL APPLICABILITY

The present invention can be applied to an energy storage device used as a power source for automobiles, other vehicles, electronic devices, and the like.

### DESCRIPTION OF REFERENCE NUMERALS

100, 101, 102 Energy storage device
1, 41 Electrode body
2 Container
3 Flat surface
4 Curved surface
5 Positive electrode connecting member
6 Positive electrode terminal
7 Negative electrode connecting member
8 Negative electrode terminal
9 Container body
10 Lid body
11 Side wall
12 Protrusion
13 Recess
14 Flat surface
15 Slope
16 Surface other than protrusion on inner surface
17 Corner portion formed by flat surface and slope
18 Bottom plate
21 Positive electrode
22 (22a, 22b) Separator
23 Negative electrode
25 Positive electrode base material
26 Positive electrode active material layer
27 Negative electrode base material
28 Negative electrode active material layer
29 Base material layer
30 Inorganic layer
40 Insulating member
42 End surface
200 Energy storage unit
300 Energy storage apparatus
t1 Distance between pair of protrusions
t2 Maximum thickness of electrode body
W Winding axis
H Height of protrusion
θ Angle formed by surface other than protrusion on inner surface and slope

## Claims

1. An energy storage device comprising:
an electrode body having a flat surface; and
a stainless steel container accommodating the electrode body, wherein
the container has a protrusion on an inner surface thereof, the protrusion being provided at a location facing the flat surface of the electrode body, and
the electrode body has an outermost layer containing inorganic particles as a main component.

2. The energy storage device according to claim 1, wherein the container has, on an outer surface thereof, a recess along a shape of the protrusion on the inner surface.

3. The energy storage device according to claim 1 or 2, wherein, in a state in which no external force is applied to the container, at least a part of the flat surface of the electrode body is in contact with the protrusion on the inner surface of the container directly or via another member.

4. The energy storage device according to claim 1 or 2, further comprising an insulating member interposed between the electrode body and the container.

5. The energy storage device according to claim 1 or 2, wherein
the electrode body is a wound electrode body formed by winding a positive electrode and a negative electrode in a state in which the positive electrode and the negative electrode are stacked with a separator interposed therebetween, and
the outermost layer of the electrode body is a part of the separator.

6. The energy storage device according to claim 1 or 2, wherein
the electrode body is a wound electrode body formed by winding a positive electrode and a negative electrode in a state in which the positive electrode and the negative electrode are stacked with a separator interposed therebetween,
the container has a container body having an opening and a lid body closing the opening, and
a winding axis of the electrode body is parallel to the lid body.

7. The energy storage device according to claim 1 or 2, wherein
the electrode body is a wound electrode body formed by winding a positive electrode and a negative electrode in a state in which the positive electrode and the negative electrode are stacked with a separator interposed therebetween,
the container has a container body having an opening and a lid body closing the opening, and
a winding axis of the electrode body is perpendicular to the lid body.

8. A method for manufacturing an energy storage device, comprising:
preparing an electrode body having a flat surface;
preparing a stainless steel container having a protrusion on an inner surface thereof; and
inserting the electrode body into the container in such a way that the flat surface of the electrode body and the protrusion on the inner surface of the container face each other,
wherein the electrode body has an outermost layer containing inorganic particles as a main component.
